# EUROPÄISCHE PATENTSCHRIFT

(11) **EP 1 427 946 B1**
(45) Veröffentlichungstag und Bekanntmachung des Hinweises auf die Patenterteilung: **12.04.2006**
(21) Anmeldenummer: 02769919.8
(22) Anmeldetag: 06.09.2002
(51) Int. Cl.: F16C 17/00, F16C 19/00, G01L 5/00

(54) **SENSORELEMENT ZUR ERFASSUNG EINER PHYSIKALISCHEN MESSGRÖSSE ZWISCHEN TRIBOLOGISCH HOCH BEANSPRUCHTEN KÖRPERN**
SENSOR ELEMENT FOR DETECTING A PHYSICAL MEASURING VARIABLE BETWEEN BODIES EXPOSED TO HIGH TRIBOLOGICAL STRAIN
ELEMENT DETECTEUR SERVANT A LA DETECTION D'UNE GRANDEUR PHYSIQUE A MESURER ENTRE DES CORPS SOUMIS A UNE CONTRAINTE TRIBOLOGIQUEMENT ELEVEE

(30) Priorität: 08.09.2001 DE 10144271
(43) Veröffentlichungstag der Anmeldung: 16.06.2004
(73) Patentinhaber: ROBERT BOSCH GMBH, 70442 Stuttgart (DE)
(72) Erfinder: MEYER, Klaus, 71254 Ditzingen (DE); NEMZOV, Julius, 73730 Esslingen (DE); MUELLER, Ulrich, CH-8704 Herrliberg (CH)
(86) Internationale Anmeldenummer: PCT/DE2002/003310
(87) Internationale Veröffentlichungsnummer: WO 2003/025407

(56) Entgegenhaltungen:
- EP-A- 1 058 106
- WO-A-95/08721
- U. MÜLLER, R. HAUERT, M. TOBLER: "ULTRAHARTSTOFF-BESCHICHTUNGEN AUS KOHLENSTOFF" 1997 , OBERFLÄCHEN UND WERKSTOFFE, NR. 32, PAGE(S) 8-15 XP009003699 in der Anmeldung erwähnt das ganze Dokument
- PEEKEN H ET AL: "MODERNE MESSTECHNIK MITTELS AUFGEDAMPFTER GEBER IN GLEIT-UND WAELZLAGERN" , KONSTRUKTION, SPRINGER-VERLAG. BERLIN, DE, VOL. 32, NR. 6, PAGE(S) 241-246 XP000195198 in der Anmeldung erwähnt das ganze Dokument

## Beschreibung

Die Erfindung betrifft ein Sensorelement zur Erfassung einer physikalischen Messgröße wie eines Druckes, einer Temperatur, einer Spaltweite oder einer Kapazität zwischen zwei sich bei Betrieb relativ zueinander bewegenden, tribologisch hoch beanspruchten Körpern nach der Gattung der unabhängigen Ansprüche.

Ein solches Sensorelement ist aus der EP 1 058 106 A bekannt.

### Stand der Technik

Geschmierte Kontakte oder elastohydrodynamische Kontakte, wie sie beispielsweise bei Lagern (Kugellager, Rollenlager oder Gleitlager) oder anderen, miteinander in Verbindung stehenden Elementen wie Zahnradkontakten, Nocken-Stößel-Kontakten usw. vorkommen, unterliegen sehr hohen tribologischen Belastungen. Unter solchen Betriebsbedingungen kann es vorkommen, dass der Schmierfilm zwischen den sich relativ zueinander bewegenden Körpern lokal unzureichend ist oder unterbrochen wird, d.h. es kommt zu einer sogenannten "Mischreibung", wodurch sehr rasch die Grenzen der Belastbarkeit der eingesetzten Werkstoffe erreicht oder sogar überschritten werden, was Schäden an den entsprechenden Bauteilen verursacht. Insofern ist es wichtig, die Kontakttemperaturen, Kontaktdrücke und/oder Kontaktspannungen in solchen hochbelasteten, geschmierten Bauteilkontakten bei Betrieb zu überwachen, um darüber das Auftreten kritischer Beanspruchungen, beispielsweise in Folge hoher Reibungsenergiedichten, bei deren Überschreitung es zum Ausfall beispielsweise von Komponenten eines Einspritzsystems durch Adhäsion ("Fressen") in der Kraftfahrzeugtechnik kommt, zumindest zu erfassen, beispielsweise zur Untersuchung der Schadensmechanismen, idealerweise aber zu vermeiden.

Aus H. Peeken und A. Köhler, Konstruktion 32 (6/1980), Seiten 241-246 "Moderne Messtechnik mittels aufgedampfter Geber in Gleit- und Wälzlagern" ist ein Sensorelement zur Erfassung von Temperatur oder Druck zwischen zwei sich relativ zueinander bewegenden, tribologisch hoch beanspruchten Körpern bekannt. Dieses nutzt aus, dass bei vielen Materialien der elektrische Widerstand sowohl von der Temperatur als auch vom Druck abhängig ist, so dass nach einer Kalibriermessung über eine einfache Widerstandsmessung Druck und/oder Temperatur bestimmbar sind.

Im Einzelnen werden in der genannten Veröffentlichung auf den zu untersuchenden Bauteilen geeignet positionierte und geformte Metallschichten aufgebracht, die das gewünschte Messsignal aufnehmen. Daneben ist dort vorgesehen, dass der eigentliche Sensiersteg und die damit in Verbindung stehenden Kontaktflächen bzw. Leiterbahnen gegenüber dem darunter befindlichen, normalerweise metallischen Bauteil durch eine Zwischenschicht, insbesondere eine Glasschicht oder eine Keramikschicht wie eine Siliziumoxidschicht oder Aluminiumoxidschicht, elektrisch isoliert sind.

Aufgabe der vorliegenden Erfindung war die Bereitstellung eines Sensorelementes zur Erfassung einer physikalischen Messgröße wie Druck oder Temperatur zwischen zwei sich bei Betrieb relativ zueinander bewegenden, tribologisch hoch beanspruchten Körpern, wobei der eigentliche Sensiersteg oder allgemeiner die eigentliche sensitive Schicht von dem darunter liegenden Körper über eine Isolationsschicht getrennt ist, die sowohl sehr hohen tribologischen Beanspruchungen, insbesondere hinsichtlich Abriebbeständigkeit und im Fall von kritischen Betriebszuständen wie Mischreibung, gewachsen ist, als auch derart ausgestaltet ist, dass insbesondere die sensitive Schicht im Bereich der Kontaktstelle die zu erfassende physikalische Messgröße bzw. die dort vorliegenden Reibungsbedingungen möglichst wenig beeinflusst bzw. verfälscht.

### Vorteile der Erfindung

Eine erste Ausführungsform des erfindungsgemäßen Sensorelementes mit einer Deckschicht über der sensitiven Schicht, die bevorzugt als Sensiersteg ausgebildet ist, wobei unter einem Sensiersteg auch ein mäanderförmig strukturierter Steg zu verstehen ist, hat gegenüber dem Stand der Technik den Vorteil, dass damit die Abriebbeständigkeit und mechanische Belastbarkeit des Sensorelementes erheblich verbessert wird, so dass dieses insbesondere im Fall von Mischreibung eine deutlich höhere Lebensdauer besitzt. Da zudem die Deckschicht nur sehr dünn ist, beeinflusst sie die Erfassung der physikalischen Messgröße bzw. die im Kontaktbereich vorliegenden Reibungsbedingungen kaum.

In einer zweiten Ausführungsform des erfindungsgemäßen Sensorelementes wird durch die gegenüber dem Stand der Technik besonders kleine Bauform der eigentlichen sensitiven Schicht erreicht, dass diese im Bereich der Kontaktstelle die zu erfassende physikalische Messgröße nur vernachlässigbar beeinflusst und gleichzeitig eine sehr hohe laterale Auflösung gewährleistet. Dabei ist besonders vorteilhaft, wenn die sensitive Schicht als Sensiersteg mit einer Länge von 10 µm bis 5 mm, insbesondere von 100 µm bis 2 mm, einer Breite von weniger als 5 µm, insbesondere weniger als 2 µm, und einer Dicke von weniger als 200 nm, insbesondere weniger als 10 nm, ausgeführt ist.

Gleichzeitig ist eine derart verkleinerte sensitive Schicht einer erheblich verminderten mechanischen Belastung ausgesetzt, und es kommt weniger zu Ablösungen, insbesondere bei Temperaturwechseln.

In einer dritten Ausführungsform des erfindungsgemäßen Sensorelementes wird schließlich die eigentliche sensitive Schicht vor allem in kritischen Betriebszuständen vor einem schnellen Verschleiß dadurch geschützt bzw. ihre tribologische Belastung bei Betrieb dadurch gemindert, dass sie auf der Isolationsschicht innerhalb einer Ausnehmung angeordnet ist, die in einem Oberflächenbereich des entsprechenden Körpers bzw. Substrates oder in der Isolationsschicht erzeugt oder herausstrukturiert ist.

Im Übrigen lassen sich die genannten Maßnahmen zur Verbesserung der tribologischen Beständigkeit unter gleichzeitig verminderter Störung oder Verfälschung der zu erfassenden physikalische Messgröße bzw. der zu erfassenden Reibungsbedingungen vorteilhaft auch miteinander kombinieren.

Unter einer tribologisch hoch belasteten oder belastbaren Schicht ist im Rahmen der vorliegenden Beschreibung generell eine Schicht zu verstehen, die Kontaktdrücken von mindestens 1 MPa, insbesondere 10 MPa bis 20 GPa, ausgesetzt ist und diesen insbesondere auch auf Dauer standhält, während unter einer Isolationsschicht eine Schicht zu verstehen ist, deren elektrische Leitfähigkeit nicht notwendigerweise Null sein muss, die aber eine gegenüber der elektrischen Leitfähigkeit der sensitiven Schicht erheblich niedriger, vorzugsweise vernachlässigbar klein ist.

Vorteilhafte Weiterbildungen der Erfindung ergeben sich aus den in den Unteransprüchen genannten Maßnahmen.

So ist es vorteilhaft, wenn die sensitive Schicht als Sensiersteg mit einer dieser gegenüber abriebbeständigen und elektrisch schlecht leitenden oder isolierenden Deckschicht mit einer Dicke von vorzugsweise weniger als 500 nm, insbesondere weniger als 200 nm, versehen ist. Diese Deckschicht ist vorteilhaft weiter eine Schicht aus Kohlenstoff, insbesondere diamantartigem oder amorphem diamantähnlichem Kohlenstoff, die zur Verringerung der elektrischen Leitfähigkeit neben Kohlenstoff auch Sauerstoff und Silizium enthalten kann. Darüber hinaus ist vorteilhaft, wenn die Deckschicht ähnlich der Isolationsschicht oder einer Teilschicht der Isolationsschicht aufgebaut ist, so dass sie sich über ein entsprechend ähnliches Herstellungsverfahren aufbringen lässt.

Vorteilhaft ist weiter, wenn die Isolationsschicht mindestens zwei Teilschichten aufweist, nämlich eine tribologisch hoch belastbare Teilschicht, die eine vergleichsweise hohe Härte, d.h. eine Härte von mindestens 1000 HV, vorzugsweise mehr als 3000 HV, und einen vergleichsweise niedrigen Reibwert aufweist, und eine weitere Teilschicht, die gegenüber der tribologisch hoch belastbaren Schicht eine deutlich verringerte elektrische Leitfähigkeit besitzt. Auf diese Weise lassen sich die Funktionen "elektrische Isolation" und "tribologische Belastbarkeit", die die Isolationsschicht gleichzeitig erfüllen soll, auf diese beiden Teilschichten aufteilen.

Zudem ist vorteilhaft, wenn die tribologisch hoch belastbare Teilschicht der Isolationsschicht zumindest im Wesentlichen aus Kohlenstoff, insbesondere aus diamantartigem oder amorphem, diamantähnlichem Kohlenstoff besteht, und wenn die elektrisch vergleichsweise schlecht leitende Teilschicht neben Kohlenstoff, vorzugsweise als Hauptbestandteil, der bevorzugt in Form von diamantartigem oder amorphem, diamantähnlichem Kohlenstoff vorliegt, zusätzlich Sauerstoff und Silizium, vorzugsweise als Nebenbestandteile, enthält, was eine Herabsetzung der elektrischen Leitfähigkeit des ansonsten elektrisch relativ gut leitenden amorphen, diamantähnlichen Kohlenstoffes bewirkt.

Insbesondere hat es sich hinsichtlich einer Verbesserung der Haftung und der tribologischen Beständigkeit als vorteilhaft herausgestellt, wenn die Isolationsschicht eine Mehrzahl von übereinander geordneten, wiederkehrenden Teilschichtpaaren aufweist, wobei sich unter dem Sensiersteg oder der sensitiven Schicht zunächst die tribologisch höher belastbare Teilschicht und darunter dann erst die gegenüber der sensitiven Schicht elektrisch schlecht leitende oder isolierende Teilschicht vorgesehen ist.

Alternativ zur Verwendung einer Isolationsschicht aus mindestens zwei Teilschichten ist es jedoch in einigen Anwendungsfällen vorteilhaft auch ausreichend, wenn die Isolationsschicht nicht mehrere Teilschichten unterschiedlicher Zusammensetzung aufweist, sondern wenn sie zumindest im Wesentlichen aus Kohlenstoff besteht oder neben Kohlenstoff insbesondere Sauerstoff und Silizium enthält. In diesem Fall werden die Anforderungen "tribologisch hoch belastbar" und "elektrisch isolierend" durch diese eine Schicht realisiert, die dazu senkrecht zur Schichtebene entweder eine homogene Zusammensetzung oder auch eine gradierte Zusammensetzung aufweisen kann, wodurch der Übergang zu einer Isolationsschicht mit mehreren Teilschichten fließend wird.

Insgesamt führt die erläuterte Zusammensetzung und Struktur der Isolationsschicht auf dem damit versehenen Körper auch bei höchsten mechanischen Beanspruchungen zu einer sehr guten Haftung, so dass diese sich auch bei Temperaturwechseln und vorübergehenden Temperaturerhöhungen nicht ablöst. Zudem ist sie gegenüber den aus dem Stand der Technik bekannten Isolationsschichten deutlich weniger spröde und neigt weniger zu Verschleiß.

Als Material für die eigentliche sensitive Schicht eignen sich nur wenige, speziell ausgewählte Metalle wie Chrom, Platin, Titan, eine Nickel-Chrom-Legierung oder eine Nickel-Kupfer-Mangan-Legierung. Weiter weist die sensitive Schicht, die bevorzugt als Sensiersteg ausgebildet ist, hinsichtlich einer möglichst zuverlässigen und einfachen Signalauswertung und eines möglichst großen Messignals mit wenig Rauschen bevorzugt einen elektrischen Widerstand von 500 Ω bis 3 kΩ auf.

Damit eine möglichst präzise Erfassung der gewünschten physikalischen Messgröße erfolgen kann, sollte schließlich die Oberkante der sensitiven Schicht oder der mit der Deckschicht versehenen sensitiven Schicht möglichst bündig mit der Oberfläche des in diesem Bereich mit der Ausnehmung versehenen Körpers abschließen oder diese um maximal 500 nm, insbesondere 200 nm, überragen bzw. gegenüber dieser um maximal 500 nm, insbesondere 200 nm, zurückgesetzt sein. Besonders vorteilhaft ist, wenn die Höhe, um die die sensitive Schicht die Oberfläche des Körpers überragt oder gegenüber dieser zurückgesetzt ist, kleiner als dessen Oberflächenrauhigkeit ist.

### Zeichnungen

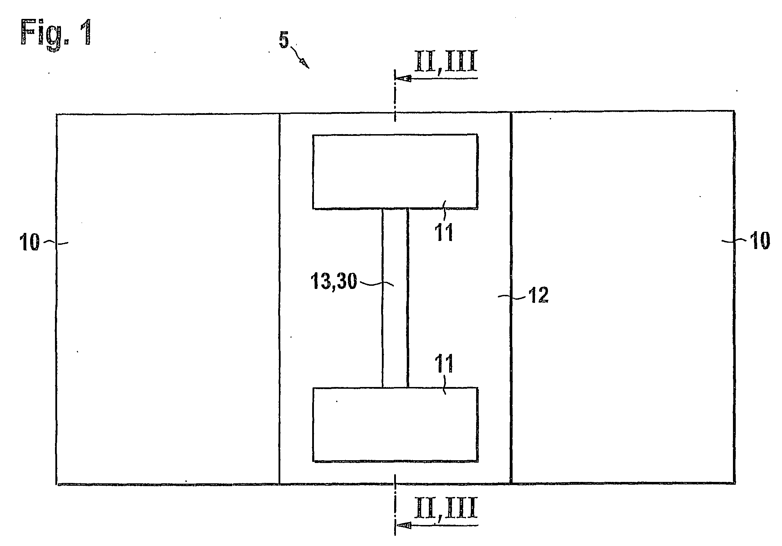

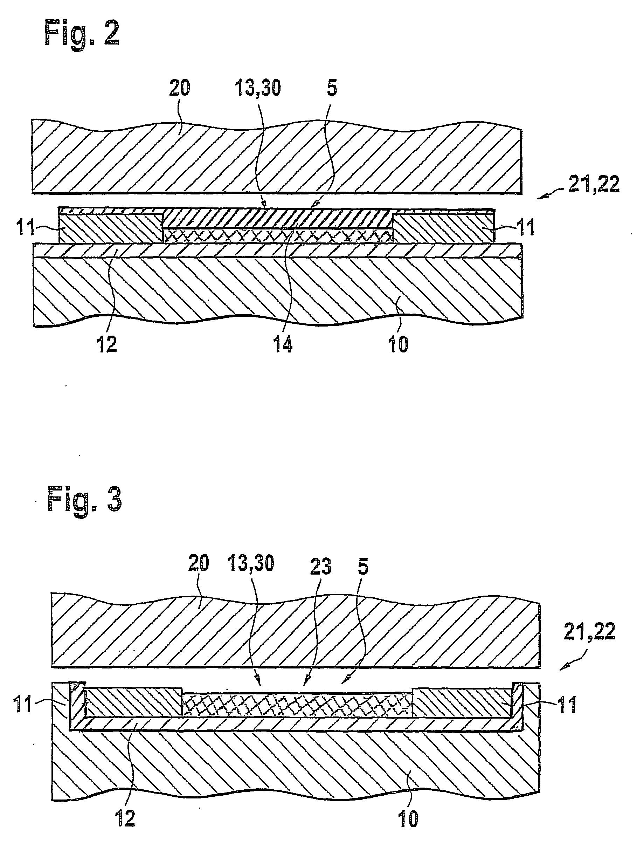

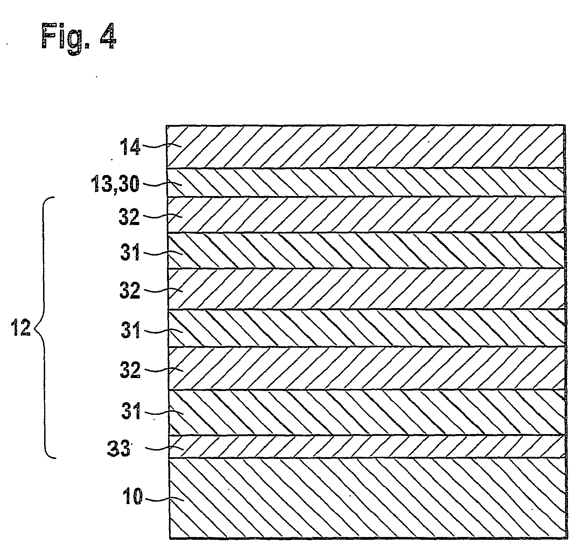

Die Erfindung wird anhand der Zeichnungen und in der nachfolgenden Beschreibung näher erläutert. Es zeigt Figur 1 eine Draufsicht auf einen Körper mit einem darauf aufgebrachten Sensorelement, Figur 2 einen Schnitt durch Figur 1 entlang der eingezeichneten Schnittlinie, wobei zusätzlich ein zweiter Körper dargestellt ist, der von dem ersten Körper beabstandet ist.und sich relativ zu diesem bewegt, Figur 3 eine alternative Ausführungsform zu Figur 2, die sich ebenfalls als Schnitt durch Figur 1 entlang der eingezeichneten Schnittlinie ergibt, und Figur 4 eine Detaildarstellung des Schichtaufbaus des Sensorelementes auf dem Körper gemäß Figur 2 oder auch Figur 3 mit einer zusätzlichen Deckschicht im Schnitt.

### Ausführungsbeispiele

Die Figur 1 zeigt ein metallisches Substrat 10, beispielsweise eine metallische Verteilerwelle in einem Hochdruckeinspritzsystem eines Kraftfahrzeuges oder eine sonstige technische Oberfläche mit einer Rauheit, die bis zu einige µm betragen kann, auf dem bereichsweise eine Isolationsschicht 12 abgeschieden ist, auf der sich zwei Kontaktflächen 11 befinden, die über eine als Sensiersteg 13 ausgebildete sensitive Schicht 30 miteinander verbunden sind, so dass die Kontaktflächen 11 und der Sensiersteg 13 eine Doppel-T-Struktur bilden, die als Sensorelement 5 zusammen mit nicht dargestellten Leiterbahnen als Teil einer elektronischen Messbrücke mit externen elektronischen Bauteilen verbunden ist. Der Sensiersteg 13 verändert sich weiter unter dem Einfluss einer zu erfassenden physikalischen Messgröße, insbesondere einem sich ändernden Druck, einer sich ändernden mechanischen Spannung, oder einer sich ändernden Temperatur, in mindestens einer messbaren physikalischen Eigenschaft, insbesondere seinem elektrischen Widerstand. Neben Temperatur und/oder Druck im Kontaktbereich zwischen den Kontaktflächen 11 ist so, beispielsweise über die Kapazität, auch die Weite eines Spaltes 21 zwischen den Kontaktflächen 11 insbesondere als Funktion der Zeit erfassbar, wobei das Medium bzw. Schmiermittel zwischen den Kontaktflächen 11 das Dielektrikum und die Kontaktflächen 11 die Platten eines Kondensators bilden bzw. entsprechend verschaltet sind.

Die Figur 2 zeigt neben dem Substrat 10 einen diesem gegenüber angeordneten metallischen Gegenkörper 20, beispielsweise eine Buchse einer Verteilerwelle. Das Substrat 10 und der Gegenkörper 20 sind zudem über einen Spalt 21 voneinander getrennt, in dem sich ein Schmiermittel 22, beispielsweise Öl oder ein Kraftstoff, befindet. Weiter zeigt Figur 2, dass beispielsweise zur Erfassung eines Kontaktdruckes und/oder einer Kontakttemperatur zwischen den sich relativ zueinander bewegenden, tribologisch hoch beanspruchten Körpern 10, 20 das Sensorelement 5 angeordnet ist. Dabei ist erkennbar, dass sich die Kontaktflächen 11 und der Sensiersteg 13 auf der Isolationsschicht 12 befinden, und dass der Sensiersteg 13 mit einer zusätzlichen Deckschicht 14 versehen ist, d.h. der auf der Isolationsschicht 12 befindliche Sensiersteg 13 besteht aus der Deckschicht 14 und der hinsichtlich der zu erfassenden physikalischen Messgröße sensitiven Schicht 30.

Die Deckschicht 14 ist im erläuterten Beispiel eine abriebbeständige, elektrisch schlecht leitende oder isolierende Deckschicht mit einer Dicke von weniger als 500 nm, die amorphen, diamantähnlichen Kohlenstoff vorzugsweise als Hauptbestandteil und Sauerstoff und Silizium vorzugsweise als Nebenbestandteil enthält. Alternativ kann die Deckschicht 14 auch im Wesentlichen nur aus Kohlenstoff, insbesondere aus amorphem diamantähnlichem Kohlenstoff bestehen, da sie dann immer noch eine gegenüber der sensitiven Schicht 30 deutliche niedrige elektrische Leitfähigkeit aufweist.

Die den Sensiersteg 13 bildende sensitive Schicht 30 besteht im erläuterten Beispiel aus Chrom, Titan, Platin, einer NiCr-Legierung mit 80 Gew.% Ni und 20 Gew.% Cr oder einer Nickel-Kupfer-Mangan-Legierung mit 86 Gew.% Cu, 12 Gew.% Mn und 2 Gew.% Ni (Manganin), und hat einen elektrischen Widerstand von 500 Ω bis 3 kΩ.

Insgesamt hat der Sensiersteg 13 im erläuterten Beispiel je nach konkreter Anwendung eine Länge von 10 µm bis 5 mm, eine Breite von weniger als 5 µm, insbesondere weniger als 2 µm, und eine Dicke von weniger als 200 nm, bevorzugt weniger als 10 nm. Schließlich ist in Figur 2 erkennbar, dass der Sensiersteg 13 gegenüber den Kontaktflächen 11 eine unterschiedliche Dicke, insbesondere eine erheblich kleinere Dicke aufweist.

Das Ausführungsbeispiel gemäß Figur 3 unterscheidet sich von dem Ausführungsbeispiel gemäß Figur 2 dadurch, dass eine entsprechend den Dimensionen der Kontaktflächen 11 bzw. des Sensiersteges 13 dimensionierte Ausnehmung 23 im Bereich der Oberfläche des Substrates 10 vorgesehen ist, wobei der Sensiersteg 13 und die Kontaktflächen 11 sich auf der Isolationsschicht 12 befinden, die den Boden der Ausnehmung 23 bedeckt. Dabei schließt die Oberkante des Sensiersteges 13, der gegebenenfalls mit der optional vorhandenen Deckschicht 14 versehen ist, möglichst bündig mit der Oberfläche des Körpers 10 ab. Die Ausnehmung 23 wurde dazu zunächst über eine entsprechend ausgestaltete Maske in das Substrat 10 eingeätzt, und danach wurde die Isolationsschicht 12 genau im Bereich der Ausnehmung 23 so aufgebracht, dass die Ausnehmung 23 danach wieder insbesondere vollständig gefüllt ist. Die Größe der Ausnehmung 23 sollte dazu so bemessen sein, dass sowohl die Kontaktflächen 11 und zugehörige Leiterbahnen als auch der Sensiersteg 13 auf der Isolationsschicht 12 vollständig Platz finden können. Anschließend wurde über eine weitere, entsprechend ausgestaltete Maske eine zweite Ausnehmung für die Kontaktflächen 11 und zugehörige Leiterbahnen in die Isolationsschicht 12 eingeätzt. In diese werden dann die Kontaktflächen 11 und die zugehörigen Leiterbahnen aufgebracht, so dass die zweite Ausnehmung bevorzugt erneut vollständig gefüllt ist. Danach wird, falls erforderlich, für den Sensiersteg 13 mit einer entsprechenden Maske eine dritte Ausnehmung in die Isolationsschicht 12 eingeätzt, in die dann der Sensiersteg 13 bzw. die sensitive Schicht 30 abgeschieden wird. Sofern nachfolgend eine zusätzliche Deckschicht 14 und/oder Haftschicht 33 aufgebracht werden, ist dies beim Ätzen insbesondere der ersten Ausnehmung entsprechend zu berücksichtigen. Die Deckschicht 14 erstreckt sich dabei bevorzugt auch über die Kontaktflächen 11 und gegebenenfalls zugehörige Leiterbahnen, soweit in diesem Bereich bei Betrieb ein Kontakt mit dem Gegenkörper 20 gegeben ist. Die Dimensionen des Sensiersteges 13 sind in Figur 3 analog zu Figur 2 gewählt.

Alternativ kann die Oberkante des Sensiersteges 13 bzw. die Oberkante der in Figur 3 optional ebenfalls vorgesehenen Deckschicht 14 die Oberfläche des Substrates 10 auch um maximal 500 nm überragen bzw. gegenüber dieser zurückgesetzt sein. Bevorzugt liegt die Größenordnung, um die der Sensiersteg 13 bzw. die Deckschicht 14 die Oberfläche des Substrates 10 überragt bzw. gegenüber dieser zurückgesetzt ist, in der gleichen Größenordnung wie die Oberflächenrauhigkeit des Substrates 10.

In einer weiteren, nicht dargestellten Ausführungsform kann auf dem Substrat 10 auch zunächst die Isolationsschicht 12 abgeschieden werden, und danach die Ausnehmung 23 in der Isolationsschicht 12 erzeugt worden sein. Anschließend erfolgt dann die Abscheidung bzw. Erzeugung des Sensiersteges 13 oder allgemeiner der sensitiven Schicht 30 und der Kontaktflächen 11 sowie der optional vorgesehenen Deckschicht 14 in der so in der Isolationsschicht 12 erzeugten Ausnehmung 23. Daneben können in einer Weiterführung dieser Ausführungsform in der Isolationsschicht 12 auch weitere Ausnehmungen vorgesehen bzw. herausstrukturiert sein, wobei dann die Kontaktflächen 11 auf der Isolationsschicht 12 im Bereich oder innerhalb dieser weiteren Ausnehmungen angeordnet und gleichzeitig elektrisch mit der sensitiven Schicht 30 verbunden sind. Diese Ausführungsform erlaubt eine besonders einfache und sichere Kontaktierung der sensitiven Schicht 30, wobei die Kontaktflächen 11 ebenfalls vor Verschleiß geschützt und gleichzeitig gegenüber dem Substrat 10 isoliert sind.

Vor dem Hintergrund, dass der Einfluss des Sensorelementes 5 auf das Messergebnis bei der Erfassung der physikalischen Messgröße möglichst gering sein sollte, wird gemäß den Figuren 2 und 3 die Fläche des Sensorelementes 5 in Draufsicht und die Fläche der Isolationsschicht 12 stets möglichst klein und vor allem dünn gehalten, so dass der auftretende geschmierte Kontakt möglichst weitgehend nur zwischen den ursprünglichen Oberflächen stattfindet. Diesem Ziel dient auch das Eingraben des Sensorelementes 5 in die Oberfläche des zu untersuchenden Substrates 10 bzw. die Forderung, dass sich die Oberfläche des Sensiersteges 13 bzw. der Deckschicht 14 möglichst auf gleicher Höhe wie die Oberkante des Substrates 10 befindet. Schließlich führt auch die dünne Ausführung der Deckschicht 14 zur einer verringerten Verfälschung des Messsignals des Sensorelementes 5.

Die Figur 4 zeigt detailliert den Aufbau der Isolationsschicht 12 auf dem Substrat 10, wobei zwischen dem Substrat 10 und der Isolationsschicht 12 zusätzlich eine Haftschicht 33 und auf der Isolationsschicht 12 neben der sensitiven Schicht 30 die gemäß Figur 2 oder 3 optionale Deckschicht 14 vorgesehen ist. Der spezifische elektrische Widerstand der Isolationsschicht 12 liegt insgesamt bei ca. 3*10⁷ Ωm.

Die Haftschicht 33 gemäß Figur 4 hat eine Dicke von 20 nm bis 1 µm und kann im Übrigen optional auch zwischen dem Sensiersteg 13, d.h. der sensitiven Schicht 30 und der Deckschicht 14, mit einer Dicke von 20 nm bis 1 µm vorgesehen sein. Im erläuterten Ausführungsbeispiel war eine zusätzliche Haftschicht zwischen sensitiver Schicht 30 und Deckschicht 14 nicht erforderlich.

Die Haftschicht 33 besteht bevorzugt aus Kohlenstoff, insbesondere diamantartigem Kohlenstoff bzw. amorphem diamantähnlichem Kohlenstoff, und Silizium, oder sie enthält diese Elemente als wesentliche Bestandteile. Alternativ kann sie auch aus einem Metall wie Chrom oder Titan, einer Metalllegierung oder einem Halbleiter wie Silizium ausgebildet sein, oder die Haftschicht 33 weist mehrere, übereinander angeordnete Teilschichten unterschiedlicher Zusammensetzung auf. Dabei ist eine dieser Teilschichten beispielsweise eine Schicht, die aus Kohlenstoff, insbesondere diamantartigem Kohlenstoff bzw. amorphem diamantähnlichem Kohlenstoff, und Silizium, besteht, oder die diese Elemente als wesentliche Bestandteile enthält, und eine andere dieser Teilschichten beispielsweise eine Schicht, die aus einem Metall wie Chrom oder Titan oder einer Metalllegierung besteht. Es kommen jedoch auch andere Materialkombinationen, auch der weiteren, oben genannten Materialien für die Haftschicht 33, für die Teilschichten in Frage.

Die Isolationsschicht 12 gemäß Figur 4 besteht aus insgesamt sechs Teilschichten, wobei diese sich zu drei Teilschichtpaaren zusammenfassen lassen. Jede dieser sechs Teilschichten hat im erläuterten Beispiel eine Dicke von ca. 660 nm. Die die Isolationsschicht 12 bildenden Teilschichten teilen sich dabei in gegenüber dem Sensiersteg 13 elektrisch zumindest schlecht leitende Teilschichten 31 und gegenüber den vergleichsweise schlecht leitenden Teilschichten 31 tribologisch höher belastbare Teilschichten 32 auf, wobei die tribologisch höher belastbaren Teilschichten 32 gleichzeitig eine gegenüber den vergleichsweise schlecht leitenden Schichten 31 höhere elektrische Leitfähigkeit aufweisen bzw. diesen gegenüber elektrisch gut leitend sind. Insbesondere besitzt die tribologisch höher belastbare Teilschicht 32 eine gegenüber der vergleichsweise schlecht leitenden Schicht 31 möglichst hohe Härte, vorzugsweise eine Härte größer 1000 HV, besonders bevorzugt größer 3000 HV, und einen möglichst niedrigen Reibwert, vorzugsweise einen Reibwert kleiner 0,01.

Die tribologisch höher belastbare Schicht 32 besteht bevorzugt zumindest im Wesentlichen aus Kohlenstoff, insbesondere aus amorphem diamantähnlichem Kohlenstoff. Die elektrisch vergleichsweise schlecht leitende Schicht 31 besteht bevorzugt aus Kohlenstoff, insbesondere amorphem diamantähnlichem Kohlenstoff, und enthält daneben vor allem zur Verringerung der elektrischen Leitfähigkeit zudem Sauerstoff und Silizium.

Im Übrigen ist wichtig, dass sich unmittelbar unter dem Sensiersteg 13 bzw. der sensitiven Schicht 30 zunächst eine tribologisch höher belastbare Schicht, d.h. die Teilschicht 32, und darunter dann eine elektrisch gegenüber dem Sensiersteg 13 zumindest schlecht leitende Teilschicht, d.h. die Teilschicht 31, befindet. Diese beiden Teilschichten 31, 32 bilden ein Teilschichtpaar, das, wie in Figur 4 dargestellt, mehrmals wiederkehrt.

Generell besitzen die tribologisch höher belastbare Teilschicht 32 und die elektrisch vergleichsweise zumindest schlecht leitende Teilschicht 31 jeweils eine Schichtdicke von 50 nm bis 5 µm, insbesondere von 300 nm bis 1 µm.

Zur Erzeugung von amorphen, diamantähnlichen Kohlenstoffschichten, wie sie in den vorstehend erläuterten Beispielen zur Herstellung der Isolationsschicht 12, der Deckschicht 14 und der Haftschicht 33 benötigt werden, sind aus dem Stand der Technik vielfältige Herstellungsverfahren bekannt. Ein Überblick über die Eigenschaften von amorphen, diamantähnlichen Kohlenstoffschichten wird beispielsweise in J. Robertson, "Hard Amorphous (Diamond-like) Carbon", Progress in Solid State Chemistry, 21, 4, (1991), Seiten 199 bis 333, oder U. Müller, R. Hauert und M. Tobler, "Ultrahartstoff-Beschichtungen aus Kohlenstoff", Oberflächen und Werkstoffe, 38, (1997), Seiten 8 bis 15, gegeben.

Zur Funktion als abriebfeste Schutzschichten haben sich vor allem mit PACVD ("Plasma Activated Chemical Vapour Deposition") abgeschiedene, amorphe diamantähnliche Kohlenstoffschichten etabliert. Dabei wird in einer Abscheidekammer unter niedrigem Gasdruck von weniger als 10 kPa durch Anlegen einer genügend hohen Spannung (Gleichspannung oder Wechselspannung von wenigen Hertz bis einigen GHz), beispielsweise einer Hochfrequenzspannung von 13,56 MHz, ein Plasma erzeugt, dem als Reaktivgas beispielsweise Acetylen oder ein anderes Kohlenwasserstoffgas wie ein bei Standardbedingungen gasförmiges Alkan (Methan, Ethan, Propan, Butan, ...), Alken (Ethen, Propen, Buten, ...) oder Alkin oder auch eine bei Standardbedingungen flüssige Verbindung wie Benzol, Cyclohexan oder Toluol zugeführt wird. Bevorzugt ist Acetylen, da dieses Gas das höchste Kohlenstoff-Wasserstoff-Verhältnis aufweist und die dichtesten und härtesten Schichten ergibt.

Die so erzeugten amorphen diamantähnlichen Kohlenstoffschichten, die besser auch als Kohlenwasserstoffschichten bezeichnet werden, weisen in der Regel einen nicht sehr hohen spezifischen elektrischen Widerstand in der Größenverordnung von 10⁴ Ωm auf. Bei einer typischen Schichtdicke von ca. 1 µm und einer Kontaktfläche von ca. 0,5 cm² ergibt dies einen Kurzschlusswiderstand von ca. 200 Ω. Dieser Wert ist zu vergleichen mit dem gewünschten elektrischen Widerstand des Sensiersteges 13, der in der Größenordnung von 1 kΩ liegt. Um eine genügende elektrische Isolation des Sensiersteges 13 gegenüber der Isolationsschicht 12 zu erzielen, ist es jedoch wünschenswert, dass die Isolationsschicht 12 einen spezifischen elektrischen Widerstand aufweist, der mindestens drei Größenordnungen größer ist, d.h. vorzugsweise bei ca. 10⁷ Ωm liegt.

Diese Erhöhung des spezifischen elektrischen Widerstandes der Isolationsschicht 12 wird über die Zusammensetzung der Isolationsschicht 12 und/oder durch die erläuterte Aufteilung in Teilschichten 31, 32 erreicht, wobei für die Isolationsschicht 12 als Ganzes die mechanischen Eigenschaften einer reinen, amorphen diamantähnlichen Kohlenstoffschicht weitgehend erhalten bleiben.

Die gewünschte Erhöhung des spezifischen elektrischen Widerstandes einer amorphen diamantähnlichen Kohlenstoffschicht zur Ausbildung der elektrisch zumindest schlecht leitenden Teilschicht 31 lässt sich am Einfachsten durch eine Änderung der Abscheideparameter beim Herstellungsverfahren, insbesondere eine Beimischung eines Reaktivgases wie eines Organosilanols bei der Schichtabscheidung, erreichen. Dabei nutzt man aus, dass durch den Einbau von beispielsweise Silizium-Sauerstoff-Verbindungen in die amorphe, diamantähnliche Kohlenstoffschicht, deren elektrische Leitfähigkeit herabgesetzt wird. Diese Vorgehensweise hat ihre Grenzen aber darin, dass durch den Einbau dieser zusätzlichen Verbindungen bzw. Elemente zwar der spezifische elektrische Widerstand erhöht wird, gleichzeitig damit aber eine unakzeptable Verschlechterung der tribologischen Eigenschaften der hergestellten Schicht einher geht. So werden amorphe, diamantähnliche Kohlenstoffschichten durch Zugabe von Hexamethyldisiloxan glasartig, so dass man eine sehr spröde, hohen mechanischen Ansprüchen nicht mehr gewachsene Schicht erhält.

Durch die vorgesehene Aufteilung der Isolationsschicht 12 in zwei Teilschichten 31, 32 mit unterschiedlichen Funktionen gelingt es insgesamt sehr gut und einfach, die an die Isolationsschicht 12 gestellten Anforderungen sowohl hinsichtlich elektrischer Leitfähigkeit als auch mechanischer Beständigkeit zu erfüllen. Insbesondere erhält man durch die erläuterte Abfolge der elektrisch zumindest schlecht leitenden Teilschicht 31 und der tribologisch höher belastbaren, elektrisch besser leitenden Schicht 32 insgesamt eine Isolationsschicht 12, die mechanisch sehr belastbar ist, eine ausreichende Duktilität und Haftung aufweist, und die insgesamt elektrisch isolierend ist.

Aufbauend auf diesen Vorüberlegungen erfolgt die Erzeugung der Haftschicht 33 bevorzugt durch Abscheidung eines Metalls oder einer Kombination verschiedener Metalle mittels PVD ("Physical Vapour Deposition"), CVD ("Chemical Vapour Deposition") oder PACVD ("Plasma Activated Chemical Vapour Deposition") unter Einsatz eines metallhaltigen Gases, beispielsweise eines Metallchlorides oder eines Organometalls, als Reaktivgas. Daneben kommt als Reaktivgas zur Abscheidung der Haftschicht 33 auch Tetramethylsilan oder eines der erwähnten Kohlenwasserstoffgase in Frage.

Die elektrisch zumindest schlecht leitende Teilschicht 31 wird mit Hilfe des erläuterten PACVD-Verfahrens unter Einsatz einer Mischung von einem oder mehreren Gasen aus der Gruppe Sauerstoff, Silan, insbesondere Monosilan, Organosilan, insbesondere Tetramethylsilan, Organosilanol, insbesondere Hexamethyldisiloxan, und Kohlenwasserstoffgas als Reaktivgas abgeschieden. Bevorzugt wird eine Mischung von Hexamethyldisiloxan und Acetylen als Reaktivgas eingesetzt, die besonders bevorzugt aus 75 Vol.% Hexamethyldisiloxan und 25 Vol.% Acetylen besteht. Alternativ kann jedoch auch ausschließlich Hexamethyldisiloxan eingesetzt werden. Zur Abscheidung der tribologisch höher belastbaren Teilschicht 32, die gleichzeitig elektrisch besser leitend ist, wird in dem erläuterten PACVD-Verfahren bevorzugt Acetylen als Reaktivgas eingesetzt.

Die die Isolationsschicht 12 bildende Schichtfolge aus den Teilschichten 31, 32 wird schließlich bevorzugt dadurch erzeugt, dass mit dem erläuterten PACVD-Verfahren die gesamte Beschichtung in einem Durchgang, d.h. ohne Unterbrechung des Plasmas, hergestellt wird, wobei beim Übergang von einer Teilschicht auf die andere ein Wechsel des Reaktivgases entweder abrupt, stufenweise, d.h. in einigen wenigen Schritten, oder kontinuierlich oder quasikontinuierlich, d.h. in vielen kleinen Schritten erfolgt. Im Übrigen sollte die Schichtdicke der Isolationsschicht 12 insgesamt nicht mehr als 6 µm betragen.

Im Übrigen sei noch erwähnt, dass das Substrat 10 und/oder der Gegenkörper 20 beispielsweise aus gehärtetem Stahl (DIN Werkstoffnummer 1.4125 oder 1.3505) besteht.

## Patentansprüche

1. Sensorelement zur Erfassung einer physikalischen Messgröße wie eines Druckes, einer Temperatur, einer Kapazität oder einer Spaltweite zwischen zwei sich bei Betrieb relativ zueinander bewegenden, tribologisch hoch beanspruchten Körpern (10, 20), wobei bereichsweise zwischen den sich relativ zueinander bewegenden Oberflächen der Körper (10, 20) in einem Oberflächenbereich von mindestens einem der Körper (10) eine sensitive Schicht (13, 30) vorgesehen ist, die von dem Körper (10) über eine Isolationsschicht (12) getrennt ist und mit einer Deckschicht (14) versehen ist, **dadurch gekennzeichnet, dass** die Deckschicht (14) gegenüber der sensitiven Schicht (13, 30) abriebbeständig und elektrisch schlecht leitend oder isolierend ist.

2. Sensorelement nach Anspruch 1, **dadurch gekennzeichnet, dass** die Deckschicht (14) eine Dicke von weniger als 500 nm, insbesondere weniger als 200 nm, aufweist.

3. Sensorelement nach einem der vorangehenden Ansprüche, **dadurch gekennzeichnet, dass** die Deckschicht (14) Kohlenstoff, insbesondere diamantartigen Kohlenstoff oder amorphen, diamantähnlichen Kohlenstoff, enthält oder zumindest im Wesentlichen daraus besteht, oder dass sie Kohlenstoff, insbesondere diamantartigen Kohlenstoff oder amorphen, diamantähnlichen Kohlenstoff, und Sauerstoff und Silizium enthält.

4. Sensorelement nach einem der vorangehenden Ansprüche, **dadurch gekennzeichnet, dass** die insbesondere in Form eines Sensiersteges (13) ausgebildete sensitive Schicht (13, 30) aus einem Metall, insbesondere Chrom, Platin, Titan oder einer NiCr- oder einer NiCuMn-Legierung, besteht, und einen elektrischen Widerstand von 500 Ω bis 3 kΩ aufweist.

5. Sensorelement nach einem der vorangehenden Ansprüche, **dadurch gekennzeichnet, dass** die sensitive Schicht (13, 30) über an zwei Enden vorgesehene, von dem Körper (10) über die Isolationsschicht (12) getrennte Kontaktflächen (11) sowie gegebenenfalls weiteren Leiterbahnen als Teil einer elektrischen Messbrücke mit externen elektronischen Bauteilen verbunden ist.

6. Sensorelement nach einem der vorangehenden Ansprüche, **dadurch gekennzeichnet, dass** die sensitive Schicht (13, 30) gegenüber den Kontaktflächen (11) eine unterschiedliche Dicke, insbesondere eine erheblich kleinere Dicke, aufweist.

7. Sensorelement nach einem der vorangehenden Ansprüche, **dadurch gekennzeichnet, dass** die insbesondere als Sensiersteg (13) ausgebildete sensitive Schicht (13, 30) eine Länge von 10 µm bis 5 mm, eine Breite von 50 nm bis 50 µm, insbesondere von 50 nm bis 5 µm, und eine Dicke von weniger als 200 nm, insbesondere weniger als 10 nm, aufweist.

8. Sensorelement nach einem der vorangehenden Ansprüche, **dadurch gekennzeichnet, dass** zwischen der Isolationsschicht (12) und dem Körper (10) und/oder zwischen der sensitiven Schicht (13, 30) und der Deckschicht (14) eine Haftschicht (33) vorgesehen ist.

9. Sensorelement nach einem der vorangehenden Ansprüche, **dadurch gekennzeichnet, dass** die Haftschicht (33) zwischen der Isolationsschicht (12) und dem Körper (10) eine Dicke von 20 nm bis 1 µm aufweist und/oder dass die Haftschicht (33) zwischen der sensitiven Schicht (13, 30) und der Deckschicht (14) eine Dicke von 20 nm bis 1 µm aufweist.

10. Sensorelement nach einem der vorangehenden Ansprüche, **dadurch gekennzeichnet, dass** die Haftschicht (33) Kohlenstoff, insbesondere diamantartigen Kohlenstoff oder amorphen diamantähnlichen Kohlenstoff, und Silizium enthält, dass die Haftschicht (33) aus einem Metall wie Titan oder Chrom, einer Legierung oder einem Halbleiter wie Silizium besteht, oder dass die Haftschicht (33) mindestens zwei übereinander angeordnete Teilschichten verschiedener Zusammensetzung aufweist.

11. Sensorelement nach einem der vorangehenden Ansprüche, **dadurch gekennzeichnet, dass** sich die sensitive Schicht (13, 30) unter dem Einfluss der physikalischen Messgröße, insbesondere einem sich ändernden Druck und/oder einer sich verändernden Temperatur, in mindestens einer messbaren physikalischen Eigenschaft, insbesondere ihrem elektrischen Widerstand, verändert.

12. Sensorelement nach einem der vorangehenden Ansprüche, **dadurch gekennzeichnet, dass** die beiden sich relativ zueinander bewegenden Körper (10, 20) durch einen Spalt (21) voneinander getrennt sind, in dem sich ein Schmiermittel (22) befindet.

13. Verwendung eines Sensorelementes nach einem der vorangehenden Ansprüche zur Erfassung eines Kontaktdruckes und/oder einer Kontakttemperatur und/oder einer Spaltweite zwischen tribologisch hoch belasteten, geschmierten Bauteilen im Kontaktbereich.

## Claims

1. Sensor element for detecting a physical measured variable such as a pressure, a temperature, a capacitance or a gap width between two bodies (10, 20) which move in relation to one another during operation and are subject to high tribological stress, with a sensitive layer (13, 30) being provided in certain regions between the surfaces of the bodies (10, 20) which move in relation to one another, in a surface region of at least one of the bodies (10) and being separated from the body (10) by means of an insulation layer (12) and being provided with a cover layer (14), **characterized in that** the cover layer (14) is abrasion-resistant and a poor electrical conductor, or is an insulator, with respect to the sensitive layer (13, 30).

2. Sensor element according to Claim 1, **characterized in that** the cover layer (14) has a thickness of less than 500 nm, in particular less than 200 nm.

3. Sensor element according to one of the preceding claims, **characterized in that** the cover layer (14) contains carbon, in particular diamond-like carbon or amorphous, diamond-like carbon, or is composed at least essentially thereof, or **in that** it contains carbon, in particular diamond-like carbon or amorphous, diamond-like carbon, and oxygen and silicon.

4. Sensor element according to one of the preceding claims, **characterized in that** the sensitive layer (13, 30) which is embodied in particular in the form of a sensing web (13) is composed of a metal, in particular chromium, platinum, titanium or an NiCr or an NiCuMn alloy and has an electrical resistance from 500 Ω to 3 kΩ.

5. Sensor element according to one of the preceding claims, **characterized in that** the sensitive layer (13, 30) is connected to external electronic components by means of contact faces (11) which are provided at two ends and are separated from the body (10) by means of the insulation layer (12), as well as, if appropriate, further conductor tracks as part of an electric measuring bridge.

6. Sensor element according to one of the preceding claims, **characterized in that** the sensitive layer (13, 30) has a different thickness, in particular a considerably smaller thickness, than the contact faces (11).

7. Sensor element according to one of the preceding claims, **characterized in that** the sensitive layer (13, 30) which is embodied in particular as a sensing web (13) has a length of 10 µm to 5 mm, a width of 50 nm to 50 µm, in particular of 50 nm to 5 µm, and a thickness of less than 200 nm, in particular less than 10 nm.

8. Sensor element according to one of the preceding claims, **characterized in that** an adhesive layer (33) is provided between the insulation layer (12) and the body (10) and/or between the sensitive layer (13, 30) and the cover layer (14).

9. Sensor element according to one of the preceding claims, **characterized in that** the adhesive layer (33) between the insulation layer (12) and the body (10) has a thickness of 20 nm to 1 µm, and/or **in that** the adhesive layer (33) between the sensitive layer (13, 30) and the cover layer (14) has a thickness of 20 nm to 1 µm.

10. Sensor element according to one of the preceding claims, **characterized in that** the adhesive layer (33) contains carbon, in particular diamond-like carbon or amorphous, diamond-like carbon, and silicon, **in that** the adhesive layer (33) is composed of a metal such as titanium or chromium, an alloy or a semiconductor such as silicon, or **in that** the adhesive layer (33) has at least two component layers which are arranged one on top of the other and have different compositions.

11. Sensor element according to one of the preceding claims, **characterized in that** the sensitive layer (13, 30) changes under the influence of the physical measured variable, in particular a changing pressure and/or a changing temperature, in at least one measurable physical property, in particular its electrical resistance.

12. Sensor element according to one of the preceding claims, **characterized in that** the two bodies (10, 20) which move in relation to one another are separated from one another by a gap (21) in which there is a lubricant (22).

13. Use of a sensor element according to one of the preceding claims for detecting a contact pressure and/or a contact temperature and/or a gap width between lubricated components, which are subject to high tribological stress, in the contact region.

## Revendications

1. Elément détecteur d'une grandeur physique, comme une pression, une température, une capacité ou un intervalle entre deux corps (10, 20) soumis à une contrainte tribologiquement élevée, se déplaçant l'un par rapport à l'autre pendant le fonctionnement, comportant par zone, entre les surfaces des corps (10, 20) se déplaçant l'une par rapport à l'autre dans une zone de surface d'au moins l'un des corps (10), une couche sensible (13, 30) séparée du corps (10) par une couche d'isolation (12) et munie d'une couche de recouvrement (14),
**caractérisé en ce que**
par rapport à la couche sensible (13, 30), la couche de recouvrement (14) est résistante à l'abrasion et électriquement mauvaise conductrice ou isolante.

2. Elément détecteur selon la revendication 1,
**caractérisé en ce que**
la couche de recouvrement (14) possède une épaisseur inférieure à 500 nm, en particulier inférieure à 200 nm.

3. Elément détecteur selon l'une quelconque des revendications précédentes,
**caractérisé en ce que**
la couche de recouvrement (14) contient du carbone, en particulier du carbone du type diamant ou du carbone amorphe, similaire au diamant, ou en est constituée tout au moins pour l'essentiel, ou elle contient du carbone, en particulier du carbone du type diamant ou du carbone amorphe, similaire au diamant, ainsi que de l'oxygène et du silicium.

4. Elément détecteur selon l'une quelconque des revendications précédentes,
**caractérisé en ce que**
la couche sensible (13, 30) réalisée en particulier sous la forme d'une tige sensible (13), est constituée d'un métal, en particulier de chrome, de platine, de titane ou d'un alliage de NiCr ou de NiCuMn, et présente une résistance électrique de 500 Ω à 3 kΩ.

5. Elément détecteur selon l'une quelconque des revendications précédentes,
**caractérisé en ce que**
la couche sensible (13, 30) est reliée à des composants électroniques externes par des faces de contact (11) séparées du corps (10) par la couche d'isolation (12), prévues à deux extrémités, ainsi que, le cas échéant, par d'autres pistes conductrices en tant que partie d'un pont de mesure électrique.

6. Elément détecteur selon l'une quelconque des revendications précédentes,
**caractérisé en ce que**
la couche sensible (13, 30) présente, par rapport aux faces de contact (11), une épaisseur différente, en particulier une épaisseur nettement plus faible.

7. Elément détecteur selon l'une quelconque des revendications précédentes,
**caractérisé en ce que**
la couche sensible (13, 30) réalisée en particulier sous la forme d'une tige sensible (13) présente une longueur de 10 µm à 5 mm, une largeur de 50 nm à 50 µm, en particulier de 50 nm à 5 µm, et une épaisseur inférieure à 200 nm, en particulier inférieure à 10 nm.

8. Elément détecteur selon l'une quelconque des revendications précédentes,
**caractérisé en ce qu'**
on prévoit une couche adhérente (33) entre la couche d'isolation (12) et le corps (10) et/ou entre la couche sensible (13, 30) et la couche de recouvrement (14).

9. Elément détecteur selon l'une quelconque des revendications précédentes,
**caractérisé en ce que**
la couche adhérente (33) entre la couche d'isolation (12) et le corps (10) présente une épaisseur de 20 nm à 1 µm et/ ou la couche adhérente (33) entre la couche sensible (13, 30) et la couche de recouvrement (14) présente une épaisseur de 20 nm à 1 µm.

10. Elément détecteur selon l'une quelconque des revendications précédentes,
**caractérisé en ce que**
la couche adhérente (33) contient du carbone, en particulier du carbone du type diamant ou du carbone amorphe similaire au diamant et du silicium, la couche adhérente (33) est constituée d'un métal comme le titane ou le chrome, d'un alliage ou d'un semi-conducteur comme le silicium, ou la couche adhérente (33) présente au moins deux couches partielles, de composition différente, disposées l'une au-dessus de l'autre.

11. Elément détecteur selon l'une quelconque des revendications précédentes,
**caractérisé en ce que**
la couche sensible (13, 30) se transforme, sous l'influence de la grandeur physique, en particulier d'une pression variable et/ou d'une température variable, dans au moins une caractéristique physique mesurable, en particulier sa résistance électrique.

12. Elément détecteur selon l'une quelconque des revendications précédentes,
**caractérisé en ce que**
les deux corps (10, 20) se déplaçant l'un par rapport à l'autre sont séparés par un intervalle (21) dans lequel se trouve un lubrifiant (22).

13. Utilisation d'un élément détecteur selon l'une quelconque des revendications précédentes, pour la détection d'une pression de contact et/ou d'une température de contact et/ou d'un intervalle entre des composants lubrifiés, soumis à une contrainte tribologiquement élevée, dans la zone de contact.
